(19) Europäisches Patentamt
European Patent Office
Office européen des brevets

(11) **EP 3 679 338 B1**

(12) **EUROPEAN PATENT SPECIFICATION**

(45) Date of publication and mention
of the grant of the patent:
**19.11.2025 Bulletin 2025/47**

(21) Application number: **18785747.9**

(22) Date of filing: **10.09.2018**

(51) International Patent Classification (IPC):
**G01L 1/22** (2006.01)

(52) Cooperative Patent Classification (CPC):
**G01L 1/2218; G01L 1/2243**

(86) International application number:
**PCT/IB2018/056894**

(87) International publication number:
**WO 2019/049099 (14.03.2019 Gazette 2019/11)**

(54) **FORCE SENSOR**

KRAFTSENSOR

CAPTEUR DE FORCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.09.2017 CH 11202017**

(43) Date of publication of application:
**15.07.2020 Bulletin 2020/29**

(73) Proprietor: **Alemnis AG
3645 Gwatt (Thun) (CH)**

(72) Inventor: **BREGUET, Jean-Marc
6926 Montagnola (CH)**

(74) Representative: **Patentsmith SA
Bahnhofstrasse 87
3232 Ins (CH)**

(56) References cited:
**DE-A1- 3 438 498        DE-C2- 3 438 498
GB-A- 2 011 097         US-A- 3 096 644
US-A- 3 433 064         US-A- 4 488 441
US-A1- 2007 051 190     US-A1- 2011 162 465**

## Description

## Technical Field

The invention relates to a force sensor according to claim 1. The invention furthermore relates to a method for manufacturing an elastic body of a force sensor, according to claim 12.

## Background Art

Force sensors, also called load cells in some cases, are based on an elastic body whose deformation is measured by sensing devices such as capacitive sensors, optical sensor, laser interferometer or strain gauges (one of the most current solution because of its high sensitivity and simplicity).

So, essentially, a force sensor is a sensor that measures a displacement (X) relating the force to be measured (F) to the deformation of the elastic body through its stiffness (K):

$$F = K * X$$

And the force resolution dF (smallest force variation that can be measured) is related to the displacement resolution (dX) by the stiffness (K):

$$dF = K * dX$$

Therefore, for a given displacement resolution ($dX_o$), the minimum force that can be detected dFo:

$$dFo = K * dXo$$

A "flexible" sensor therefore has a high force resolution.

If one wants a very sensitive sensor, one will design a very flexible elastic body (typically a long beam or membrane, known example in the nanotechnology: AFM probe).

However, in many applications, the low stiffness (or in other words: high flexibility) of the sensor perturbs the operation of the measuring system (example in a robot arm or in mechanical testing) in which the sensor is integrated. Therefore, the choice of the sensor is a tradeoff between rigidity and force sensitivity.

One way to go around this problem is to use an active (or compensation) sensor that comprises, for example, of an elastic body, a position sensor and an actuator. When the elastic body is subject to a force, its deformation will be detected by the position sensor and a closed loop will activate the actuator that will generate an exactly equal force to the applied force therefore zeroing the deformation. Its apparent stiffness is then theoretically infinite.

Such a solution is interesting but presents several issues, the two main issues being:

- Complexity (mechanical and electronics controller necessary), and
- The control loop has a limited bandwidth therefore the instantaneous stiffness is very low.

The document US 2011/162465 discloses a known force sensor.

## Problem to be Solved

It is the object of the invention to solve or to at least diminish the above-mentioned disadvantages.

## Solution to the Problem

This problem is solved by a force sensor according to claim 1. This force sensor comprises an elastic body and at least one strain gauge, wherein

the elastic body is configured to deform essentially exclusively in at least a first specific location,
wherein the first specific location hosts the strain gauge,
wherein the first specific location comprises a bridge,
wherein the bridge connects a connection part of the elastic body to a main body of the elastic body,
wherein a sensitive part of the strain gauge covers the bridge,
wherein said elastic body comprises a multitude of slits and flexure blades arranged such that the elastic body is essentially flexible in one direction parallel to the surface normal of said flexure blades and essentially non-flexible in all other directions, said flexure blades extending perpendicular to said one direction,
and wherein said bridge is arranged to deform in traction or compression in said one direction, said bridge extending parallel to said one direction. Like this, the force can be determined by assessing the deformation at the specific location in a highly sensitive manner, but essentially no other possibly inconvenient deformations occur. The elastic body shall also be referred to as "flexible body". In other words the "elastic body" and the "flexible body" are the same thing.

In a typical embodiment, the elastic body is configured to deform essentially exclusively in a multitude of specific locations, wherein the multitude of specific locations comprises the first specific location.

In a typical embodiment, the first specific location and/or the multitude of specific locations are each configured to host a strain gauge.

In a typical embodiment, a form of each specific location corresponds essentially exactly to a sensitive region of the corresponding strain gauge.

In a typical embodiment, the multitude of specific locations comprises an equal number of specific locations, wherein the elastic body is designed such that one half of the specific locations are subject to compression and the other half of the specific locations are subject to traction when the elastic body is deformed, in particular in a typical deformation direction.

In a typical embodiment, the specific locations are distributed essentially symmetrically around the elastic body.

In a typical embodiment, that the elastic body is essentially cylindrical or essentially cubical.

In typical embodiments, at least one specific location comprises a bridge, wherein the bridge connects a connection part of the elastic body to a main body of the elastic body.

In typical embodiments, the elastic body comprises at least four bridges, wherein each bridge connects the connection part to the main body. Alternatively, it is also possible that the elastic body comprises only one bridge, two bridges or yet three bridges. In a particular embodiment, two bridges are employed in a half Wheatstone-bridge configuration. In a particular embodiment, four bridges are employed in a full Wheatstone-bridge configuration.

In typical embodiments, the bridges comprise at least two upper bridges and at least two lower bridges, each bridge comprises a top connection and a bottom connection, wherein the top connections of the upper bridges are connected to the main body and/or wherein the bottom connections of the upper bridges are connected to the connection part and/or wherein the top connections of the lower bridges are connected to the connection part and/or wherein the bottom connections of the lower bridges are connected to the main body.

In typical embodiments, the elastic body comprises a front side cover and/or a back side cover, wherein the front side cover and/or the back side cover are configured such that they increase a rigidity of the elastic body when they are attached to the front side and/or the back side of the elastic body.

A force sensor according to the invention comprises an elastic body according to the invention and at least one strain gauge placed on the first specific location, preferably a multitude of strain gauges, wherein preferably each strain gauge is placed on a corresponding specific location.

In a typical embodiment, the force sensor is configured such that a strain of each specific location is measured by its corresponding strain gauge.

A method for manufacturing an elastic body of a force sensor according to the invention, comprises the steps:

- creating, in particular drilling, a multitude of access holes into a workpiece, wherein the workpiece typically comprises titanium,

- creating at least one undercut in the workpiece, wherein the undercut interacts with at least one of the access holes such as to create at least one bridge,

- using the access holes for inserting a wire for electro-discharge machining into the workpiece,

- cutting a multitude of slits into the workpiece by means of the wire, such as to create the elastic body, wherein the flexure blades are preferably formed by the cutting of the slits.

In typical embodiments, the workpiece comprises other materials, for example aluminum alloys, silicon, fused silica or the like.

In typical embodiments, the flexure blades and/or the bridges are machined by means of electroerosion.

## FIGURES

In the following, the invention is described in detail by means of drawings, wherein show:

Figure 1: a perspective view of an elastic body in one embodiment of the invention (cylindrical embodiment),

Figure 2: a perspective view of an elastic body in a second embodiment of the invention (cuboid embodiment),

Figure 3: a second perspective view of the elastic body shown in Figure 2,

Figure 3a: a third perspective view of the elastic body shown in Figures 2 and 3,

Figure 4: a front view of an elastic body according to a third embodiment of the invention,

Figure 5: a zoom-in on the front view of the elastic body already shown in Figure 4,

Figure 6: a further zoom-in on the front side of the elastic body already shown in Figures 4 and 5,

Figure 7: a perspective view of the elastic body already shown in Figures 4 to 6,

Figure 8: another perspective view of the elastic body already shown in Figures 4 to 7,

Figure 9: a zoom-in on the perspective back view of the elastic body already shown in Figure 8,

Figure 10: another perspective view with parts of the front side of the elastic body according to the third embodiment of the invention,

Figure 11: a stronger magnification of the bridge zone Z indicated in Figure 10,

Figure 12: a perspective view of a cover configured to be attached to the elastic body, and

Figure 13: a schematic visualization of the functioning of the elastic body according to the third embodiment.

## Description of Preferred Embodiments

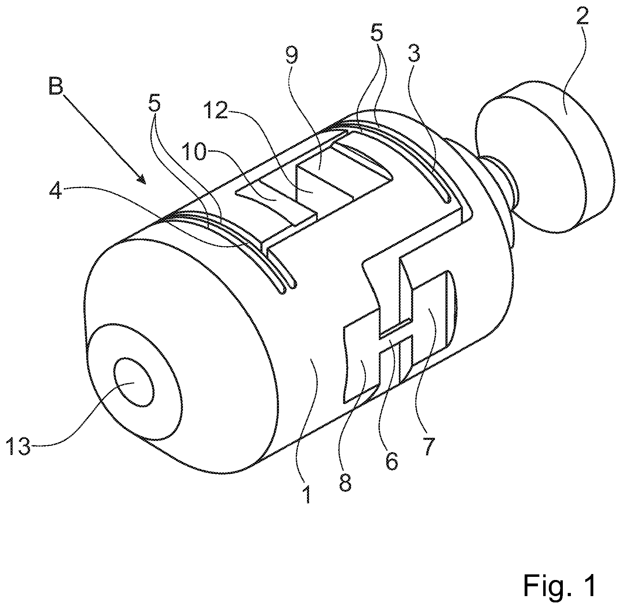

Figure 1 shows a flexible body B. The flexible body B comprises a main body 1 and a connection part 2. The main body 1 has essentially the form of a cylinder. The main body 1 and the connection part 2 are connected together by a flexure system composed of two blades 3, 4 surrounded by slits 5 cut into the main body 1 and the connection part 2.

The flexure system is designed to allow a (almost totally) free linear movement of the connection part 2 against the main body 1 in the direction of the cylinder axis and to block (almost) completely any other movements (translations and rotations).

Main body 1 and connection part 2 are also connected by two bridges 6 (the second is on the other side of the cylinder, not visible) where strain gauges (not represented) are attached. The sensitive part of the strain gauge covers the bridge 6 while its electrical terminals and the other extremity rests on a the flats 7 and 8.

Two others strain gauges are attached on flats 9 and 10 (and on the opposite side of the cylinder). Optionally the gap between flats 9 and 10 can also be connected by a bridge.

A terminal, e.g. gripper or indentation tip can be attached to the body in 13.

When a force is applied on main body 1, let's say in the direction 13 - 2, the two strain gauges 6 are subjected to a compression while the two strain gauges 12 (not represented) are subject to a tension.

Similarly, when the force is applied in the opposite direction, the two strain gauges 6 are subjected to a tension while the two strain gauges 12 (not represented) are subject to a compression.

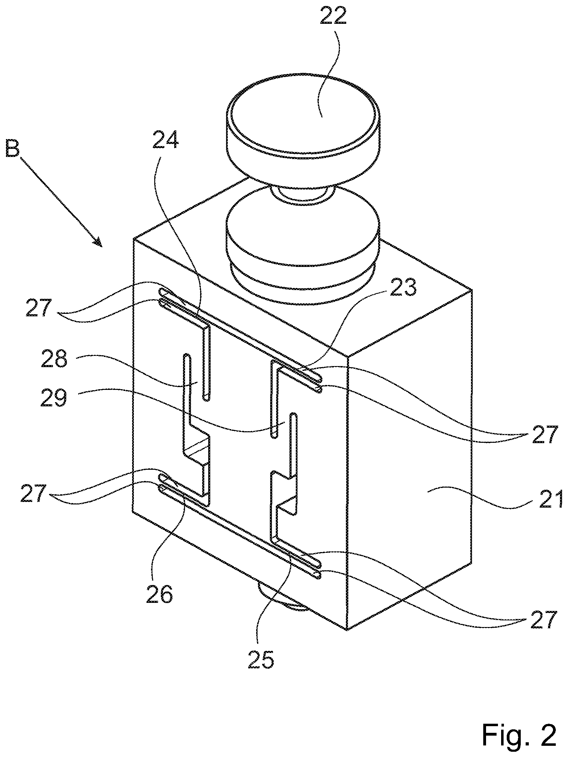

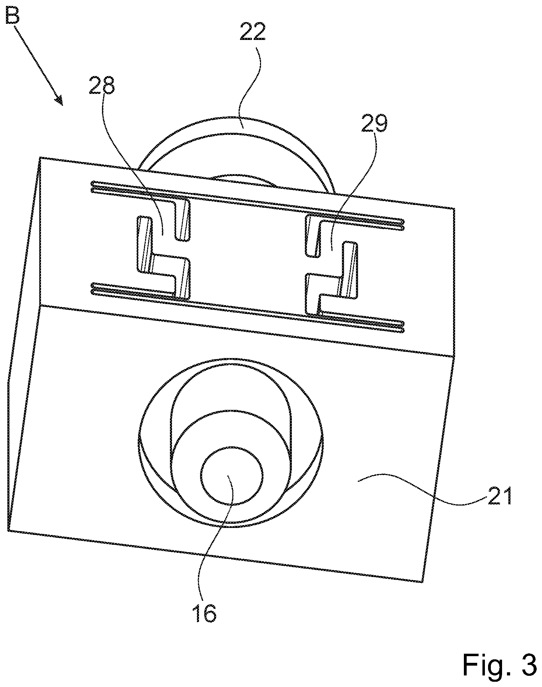

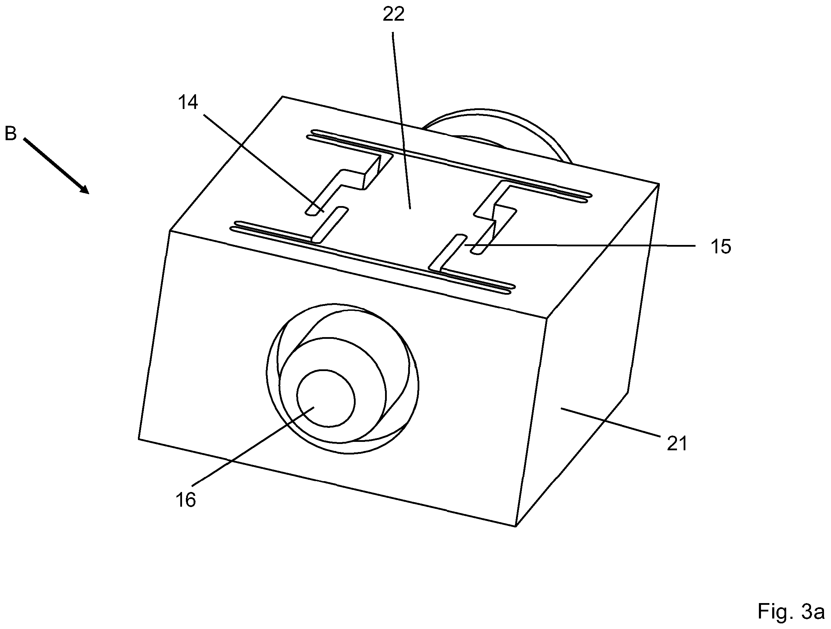

Figure 2, 3 and 3a show a flexible body B according to another embodiment of the invention. Figures 2 and 3 show perspective views comprising a front side of the elastic body B and Figure 3a shows a perspective view comprising a back side of the flexible body B, The flexible body B comprises a main body 21 and a connection part 22. The main body 21 has essentially the form of a cuboid. The main body 21 and the connection part 22 are connected together by a flexure system composed of four blades 23, 24, 25 and 26, surrounded by slits 27 cut into main body 21 and connection part 22.

The flexure system is designed to allow a (almost totally) free linear movement of connection part 22 against main body 21 in the direction of parallel to the long side of the cuboid, and to block (almost) completely any other movements (translations and rotations).

Main body 21 and connection part 22 are also connected by four bridges 28, 29, 14, 15. Two to the top surface, namely bridges 28 and 29, two on the other side (see Figure 3a, namely bridges 14 and 15) where strain gauges (not represented) are attached. The sensitive part of the strain gauge covers the bridge.

A terminal, e.g. gripper or indentation tip can be attached to the body at the attachment 16 (see Figures 3 and 3a).

When a force is applied on the connection part 22 or the main body 21 (while the respective rest of the elastic body is held fix), let's say in the direction 16 - 22, strain gauges mounted on the bridges 14 and 15 (see Figure 3a) are subjected to a compression or tension while strain gauges mounted on the bridges 28 and 29 (see Figures 2 and 3) are subjected to a tension or compression (namely the opposite of the type of deformation that occurs at the bridges 14, 15 located on the other side of the elastic body B).

In general, when the strain gauges on bridges 14 and 15 (see Figure 3a) are subjected to a tension, then the strain gauges on bridges 28 and 29 (see Figures 2 and 3) are subjected to a compression, and vice-versa.

In typical embodiments (for example referring to Figures 2 and 3), the elastic body B comprises a main body 21 and a connection part 22, wherein the connection part 22 and the main body 21 are linked to each other by means of four flexure blades 23, 24, 25 and 26 and four bridges 28, 29, 14, 15. In typical embodiments, the connection part 22 comprises the attachment 16. When a force is applied to the elastic body B, for example onto the connection part 22 while the main body 21 is held fix, a relative movement between the connection part 22 and the main body 21 occurs. Due to the particular configuration of the flexure system (which comprises for example the slits 27 and the flexure blades 23, 24, 25, 26), the relative movement can essentially only occur in one preferential deformation direction, namely the direction following the long side of the cuboidal main body 21 in Figures 2 and 3, or in other words a direction which runs parallel to the surface normal of the four flexure blades 23, 24, 25, 26. All other relative movements, for example translational or rotational movements, between the main body 21 and the connection part 22 are essentially completely blocked by the flexure system. The elastic body B is thus configured to deform essentially exclusively in at least a first specific location, namely at least one of the bridges 28, 29, 14, 15. If one places strain gauges on the bridges 28, 29, 14, 15, these strain gauges can be used to detect the deformation of the bridges and to calculate the force applied onto the elastic body B by means of the strain gauge measurements.

In a preferred embodiment, the force sensor comprises a cylindrical elastic body with four strain gauges arranged circumferentially around the elastic body. The elastic body is optimized for one axis force sensors. Two strain gauges might be free standing (only attached on both ends). The motivation is optimization of the performances. In another preferred embodiment, the elastic body is prismatic. This leads to symmetry. In both these embodiments a flexure guidance blocks all degrees of freedom except the direction in which the force is measured. To maximize the performances, the flexure stiffness should be as low as possible (negligible compared to the localized regions) in the direction of the force and as high as possible in all other directions. Based on the fundamental principle of "localized deformations" and high rigidity guidance's system in all axis other than the one of force measurement, unlimited other elastic bodies can be imagined. The usage of additive manufacturing technics or other free 3D manufacturing technics open the road for various solutions.

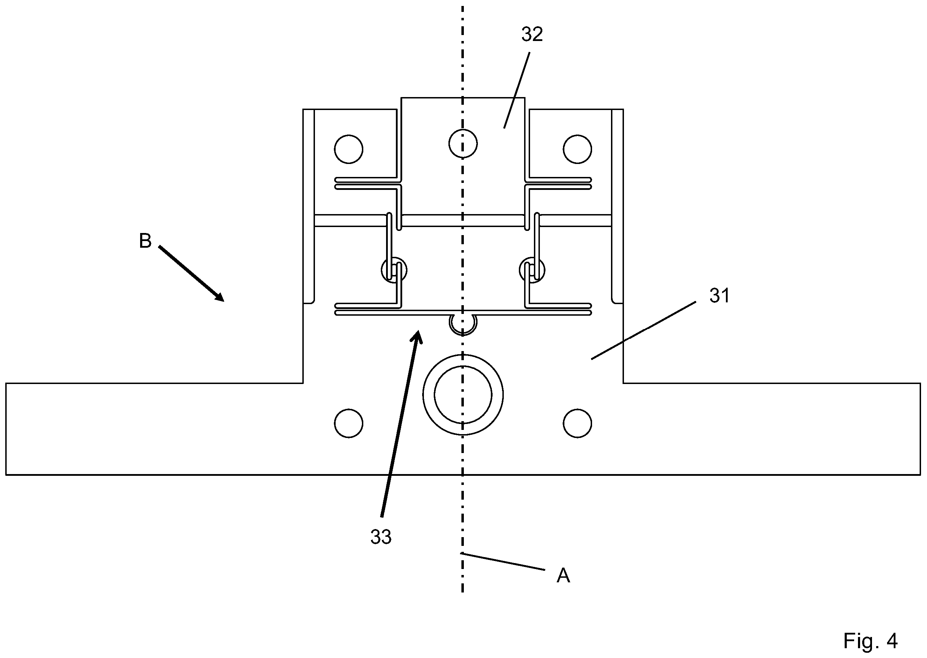

Figure 4 shows a front view of an elastic body B according to a third embodiment of the invention. The elastic body B comprises a main body 31 and a connection part 32. The main body 31 and the connection part 32 are connected together (in other words: linked to each other) by means of a flexure system 33. The flexure system 33 is configured such that the connection part 32 is movable in relation to the main body 31 essentially exclusively in one preferential deformation direction. This preferential deformation direction is orientated in the direction of the deformation axis A, which runs through the centre of the connection part 32 and the main body 31, as shown in Figure 4. In Figure 4, the deformation axis A is oriented vertically. The deformation axis A does not necessarily have to run through the centre of the connection part 32.

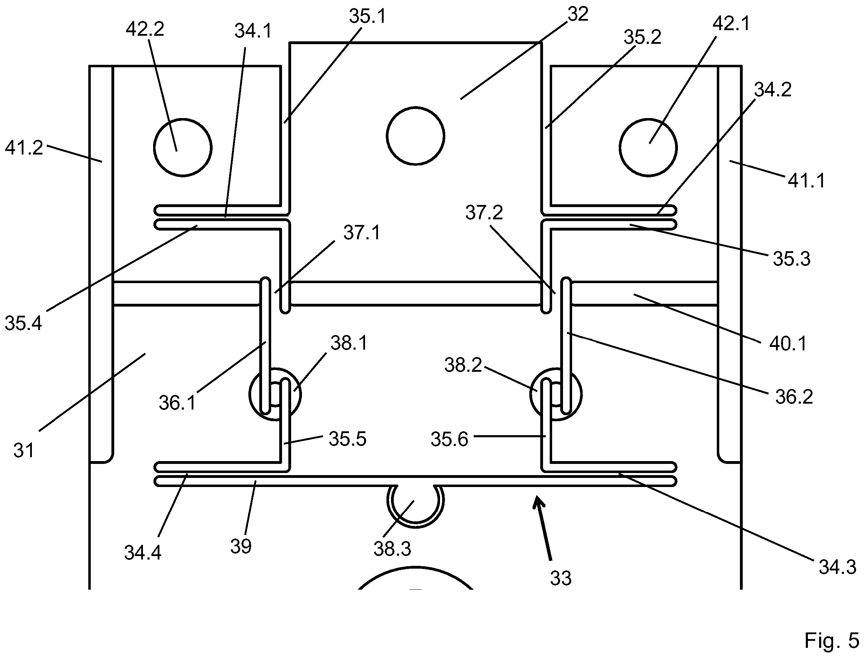

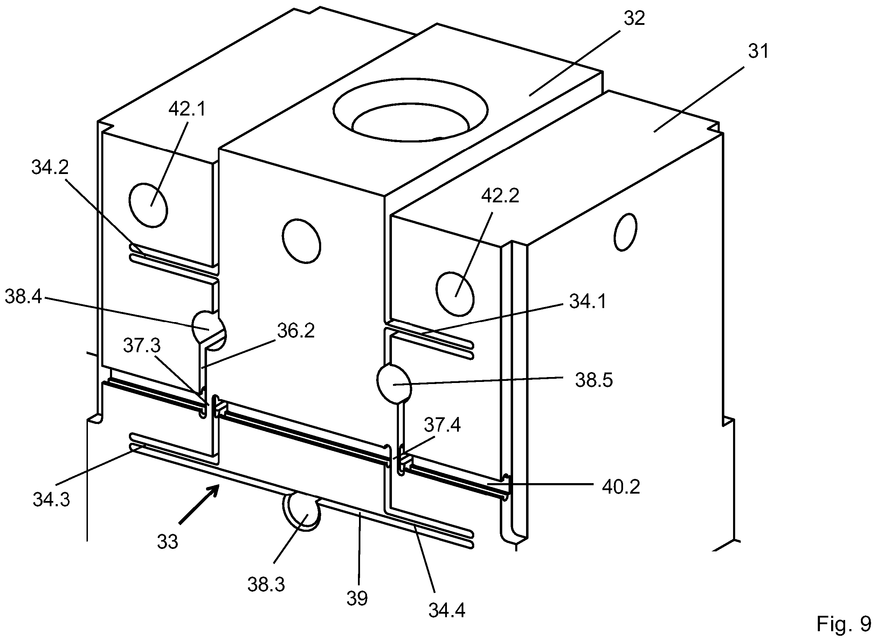

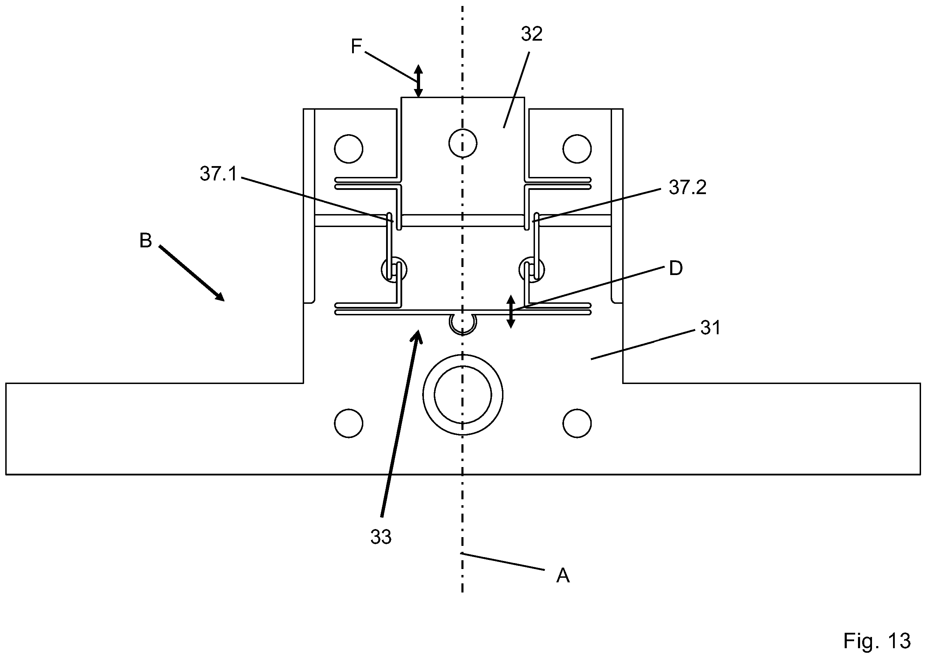

Figure 5 shows a zoom-in on the front view of the elastic body B already shown in Figure 4. In particular, Figure 5 shows details of the flexure system 33. In particular it becomes clear from Figure 5, that the flexure system 33 comprises a multitude of slits, flexure blades, recesses, holes and the like. In particular, the flexure system 33 comprises four flexure blades 34.1 to 34.4. The flexure system 33 furthermore comprises six rectangular slits 35.1 to 35.6. The flexure system 33 furthermore comprises two short straight slits 36.1, 36.2 (the straight slits 36.1, 36.2 do not necessarily have to be short, but are named in this way here in order to differentiate them from the straight slit 39). The flexure system 33 furthermore comprises a long straight slit 39. The zoom-in on the flexure system 33 of Figure 5 furthermore shows two bridges 37.1, 37.2 as well as three access holes 38.1 to 38.3. The side of the elastic body B shown in Figure 5 is referred to as the front side of the elastic body B. The elastic body B comprises two additional bridges 37.3, 37.4, which are arranged on a back side of the elastic body B and which are thus not shown in Figure 5 (but which are shown in Figure 9 for example). The zoom-in on the flexure system 33 of Figure 5 furthermore shows a horizontal undercut 40.1, undercutting the bridges 37.1, 37.2. A similar undercut 40.2 is arranged on the back side of the elastic body B (see Figure 9 for example). Furthermore, two vertical guiding cut-outs 41.1, 41.2 are shown as part of the main body 31 in Figure 5. Figure 5 also shows two cover attachment holes 42.1, 42.2 located close to the top of the main body, on both sides of the connection part 32, respectively. The flexure blades 34.1 to 34.4 are essentially rectangular. Their respective surface normals are all parallel with the deformation axis A (see Figures 4 and 13).

In general, at least in certain embodiments, the representations of the third embodiment of the elastic body B shown in Figures 4 to 13 can be regarded as true-to-scale representations, meaning that the proportions of the different features of the elastic body B shown in the Figures can correspond to the real proportions.

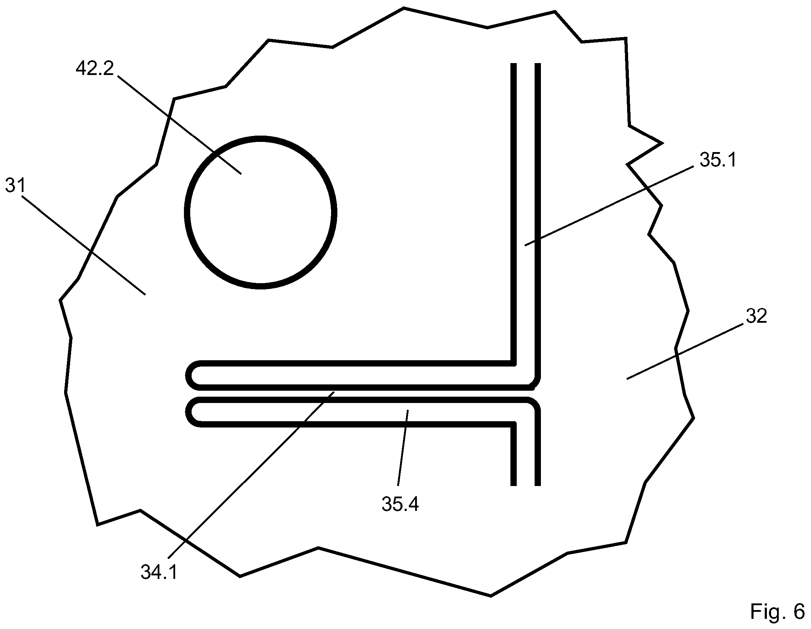

Figure 6 shows a further zoom-in on the front side of the elastic body B already shown in Figures 4 and 5. In particular, Figure 6 shows a part of the main body 31 and a part of the connection part 32. Figure 6 furthermore shows parts of the rectangular slits 35.1 and 35.4 as well as flexure blade 34.1 of the flexure system 33. It can be observed that the flexure blade 34.1 links the connection part 32 to the main body 31. Similarly, the other flexure blades 34.2 to 34.4 (not shown in Figure 6 but shown in Figures 4 and 5 for example) link the connection part 32 to the main body 31 at other locations of the elastic body B. Figure 6 furthermore shows the cover attachment hole 41.2.

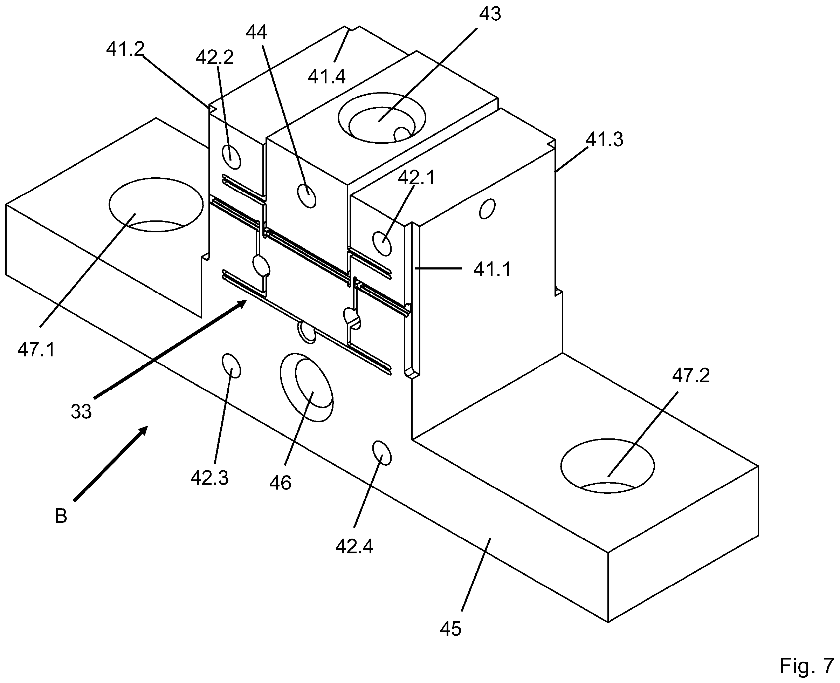

Figure 7 shows a perspective view of the elastic body B already shown in Figures 4 to 6, wherein the front side of the elastic body B is once more visible. The front side (or parts of it) was/were already shown in Figured 4 to 6. It is shown in Figure 7 that the elastic body B comprises a base element 45, which has a prismatic form. The base element 45 comprises two base holes 47.1, 47.2, arranged on a right side and a left side of the base element 45, respectively. Furthermore, the four cover attachment holes 42.1 to 42.4 are shown in Figure 7. The two lower cover attachment holes 42.3, 42.4 are integrated in the base element 35. Figure 7 furthermore shows that the elastic body B comprises two additional guiding cut-outs 41.3, 41.4, arranged on the back side of the elastic body B, in addition to the two guiding cut-outs 41.1, 41.2 comprised in the front side of the elastic body B. Figure 7 furthermore shows that the connection part 32 comprises a fixture 43 for mounting an interaction device, such as a probe and/or a sample and/or a stub and/or a sample holder and/or an indentation tip and/or a gripper or the like onto the connection part 32. For facilitating a fixation of the interaction device in the fixture 43, the connection part 32 comprises a fixation hole 44. The fixation hole 44 goes through the whole base element 45 and can therefore also be referred to as opening or passageway. The objective of the fixation hole 44 is to allow fixing the stub with a screw from one side or the other. The elastic body B furthermore comprises a base recess 46, arranged in a horizontal centre of the elastic body B (though it does not necessarily have to be located in the centre). The flexure system 33 is also visible in Figure 7 but its different sub-features (see Figure 5 for example) are not equipped with reference signs for the sake of clarity. Several of the features described with reference to Figure 7 were already visible in some of the previous Figures but are explained for the first time here for reasons of clarity.

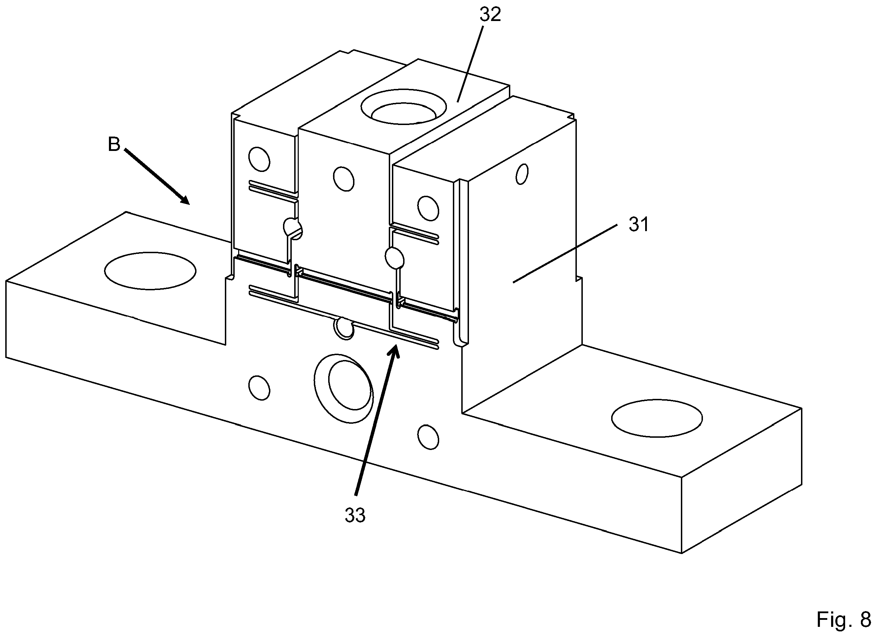

Figure 8 shows another perspective view of the elastic body B already shown in Figures 4 to 7, wherein (contrarily to the front view shown in Figures 4 to 7) the back side of the elastic body B is now shown. It becomes clear from Figure 8 that flexure system 33 essentially runs through the elastic body B from its front side to its back side thereby separating the connecting part 32 from the main body 31 throughout the elastic body B (except for the links which are established between the main body 31 and the connection part 32 by means of the four flexure blades of the flexure system and the four bridges. Some specific features of the flexure system 33 shown in Figure 8 are explained in more detail in Figure 9.

Figure 9 shows a zoom-in on the perspective back view of the elastic body B already shown in Figure 8. In particular, Figure 9 shows details of the flexure system 33. As already mentioned, it can be observed that the flexure system 33 essentially runs through the entire elastic body B, in particular from the front side to the back side. This can for example well be understood by looking at the flexure blades 34.1 to 34.4 in Figure 9 and in Figure 2: these flexure blades 34.1 to 34.4 run through the elastic body B in a horizontal direction (when holding the elastic body as shown in Figure 9, for example) and link the connection part 32 to the main body 31. Also the slits of the flexure system 33 cut through the elastic body B in a similar manner and thereby create an almost complete separation between the main body 31 and the connection part 32. For the sake of a better clarity, not all slits of the flexure system 33 are marked with reference signs in Figure 9. Exemplarily, one vertical short straight slit 36.2 (as mentioned above, not necessarily short, but in the present case shorter than the straight slit 39) as well as the horizontal long straight slit 39 are marked with reference signs in Figure 9.

Figure 9 furthermore shows that the back side of the elastic body comprises a second undercut 40.2 and two additional bridges 37.3, 37.4 (two bridges 37.1, 37.2 are comprised in the front side of the elastic body, as shown for example in Figure 5). The undercut 40.2 runs below the bridges 37.3, 37.4. When comparing the front side (as shown for example in Figure 5) and the back side (as shown for example in this Figure 9) of the elastic body B, it becomes clear that there is a vertical shift present between the undercut 40.1 of the front side and the undercut 40.2 of the back side of the elastic body B. For example, a vertical distance between the lower flexure blades 34.3, 34.4 and the back side undercut 40.2 is smaller than a vertical distance between the lower flexure blades 34.3, 34.4 and the front side undercut 40.1 (shown in Figure 5 for example). In turn, the front side undercut 40.1. is located closer to the upper flexure blades 34.1, 34.2 in a vertical direction. In general, throughout this application, the term "vertical" shall refer to the direction of the direction of the deformation axis A shown in Figures 1 and 13, and the term "horizontal" shall be understood as referring to the corresponding horizonal direction, e.g. a direction perpendicular to the direction of the deformation axis A.

Figure 9 also shows the access hole 38.3 already shown in some of the previous Figures as well as two additional access holes 38.4 and 38.5. The access holes 38.4, 38.5 run through almost the entire elastic body B and terminate just below the bridges 37.1 and 37.2 of the front side (see for example Figure 5). In a similar manner, the access holes 38.1, 38.2 of the front side (see for example Figure 5) terminate right under the back side bridges 37.3, 37.4. The purpose of the access holes 38.1 to 38.5 is for example to facilitate the manufacturing of the elastic body B, in particular the cutting of the slits of the flexure system into the main body. In particular embodiments, the access holes 38.1 to 38.5 have the purpose of enabling access for a wire for cutting the slits by means of electro-discharge machining (EMD).

Figure 9 also shows the cover attachment holes 42.1, 42.2 already shown in before (e.g. Figure 5).

The bridges 37.3, 37.4 shown in Figure 9 for example can be referred to as lower bridges whereas the bridges 37.1, 37.2 shown in Figure 5 for example can be referred to as upper bridges (based on the convention that the surface of the connection part 32 comprising the fixture 43 is referred to as "up"). Each bridge 37.1 to 37.4 comprises a top connection and a bottom connection, wherein the top connections of the upper bridges 37.1, 37.2 are connected to the main body 31, wherein the bottom connections of the upper bridges 37.1, 37.2 are connected to the connection part 32, wherein the top connections of the lower bridges 37.3, 37.4 are connected to the connection part 32 and wherein the bottom connections of the lower bridges 37.3, 37.4 are connected to the main body 31.

From all this, it becomes obvious that the only connections between the main body 31 and the connection part 32 are the four flexure blades 34.1 to 34.4 and the four bridges 37.1 to 37.4. The flexure blades 34.1 to 34.4, which are all rectangular and which have parallel surface normals, are all easily bendable in the directions of their surface normals and therefore easily allow a relative movement between the connection part 32 and the main body 31 in the direction of these surface normals and/or in the direction of the deformation axis A indicated in Figure 4. However, the flexure blades 34.1 to 34.4 block essentially all other relative movements between the main body 31 and the connection part 32. Thereby, the elastic body B is flexible only in one direction, namely the preferential deformation direction, and essentially non-flexible in all other directions. One effect of his is that when a relative movement between the connection part 32 and the main body 31 occurs, the flexible body B undergoes deformation only in specific locations, namely the four bridges 37.1 to 37.4. In typical embodiments, the relative movement between the main body 31 and the connection part 32 can essentially only occur, in particular due to the design of the flexure system 33, in the direction of the deformation axis A.

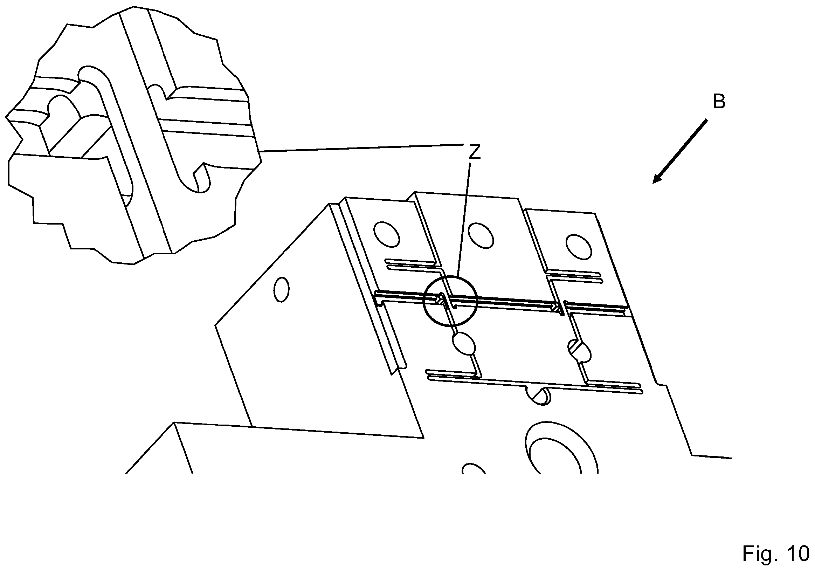

Figure 10 shows another perspective view with parts of the front side of the elastic body B according to the third embodiment of the invention. In Figure 10, a first bridge zone Z is indicated, once in the front view itself and once in a zoom-in. The first bridge zone Z comprises the first bridge 37.1. It is obvious that the elastic body B of the third embodiment comprises three more bridge zones, each comprising one of the other bridges 37.2, 37.3 and 37.4. For reasons of efficiency and as an example, only the details of the first bridge zone Z are explained in the following, but these explanations obviously also apply to the three other bridge zones of the elastic body B which are not explicitly indicated in the Figures.

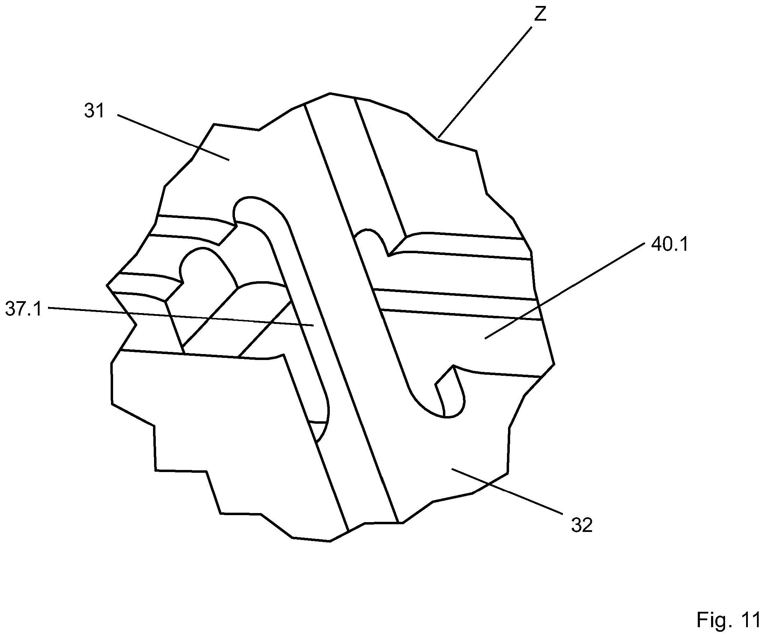

Figure 11 shows an even stronger magnification of the bridge zone Z indicated in Figure 10. It is clearly visible that the bridge 37.1 links the connection part 32 (which can also be referred to as swinging body) to the main body 31. The undercut 40.1, which runs below the bridge 37.1, is also visible in Figure 11. It is obvious from Figure 11 that if the connection part 32 (or swinging body 32) carries out a relative movement compared to the main body 31 (or in other words: the swinging body 32 moves and the main body 31 is held still), then the bridge 37.1 undergoes a traction or a compression, leading to a temporal modification of the length of the bridge 37.1. This length modification can be measured by means of a strain gauge (not shown) placed on top of the bridge 37.1. The measurement values of this strain gauge (together with the measurement values of up to three more strain gauges placed on top of the bridges 37.2 to 37.4) can then be used to calculate a force F applied onto the connection part 32, which causes the relative movement of the latter with regard to the main body 31.

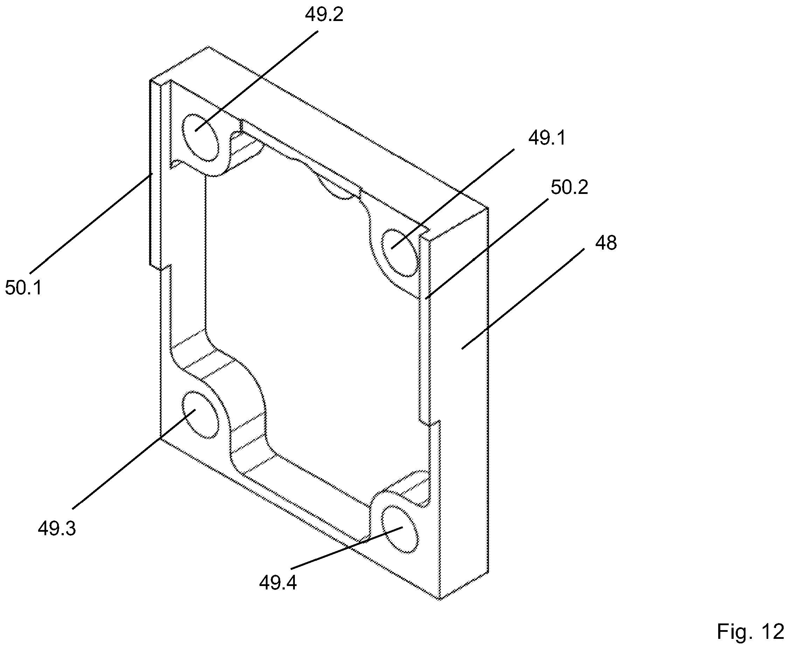

Figure 12 shows a cover 48 configured to be installed on the front side or back side of the elastic body B. Shown in Figures 4 to 11. The cover 48 comprises four screw holes 49.1 to 49.4 configured to interact with the four cover attachment holes 42.1 to 42.4 in order to fix the cover 48 onto the elastic body B by means of screws or the like (not shown). The cover 48 furthermore comprises two guiding rails 50.1, 50.2, configured to interact with the guiding cut-outs 41.1, 41.2 on the front side of the elastic body B and/or the guiding cut-outs 41.3, 41.4 on the back side of the elastic body B. The cover 48 typically comprises a top hole for enabling access to the fixation hole 44 (not shown in Figure 12, but shown in Figure 7 for example). In a particular embodiment, the cover 48 comprises an additional bottom hole for enabling access to the base recess 46 (not shown in Figure 12, but shown in Figure 7 for example). In particular embodiments, the cover 48 is configured to stabilize the elastic body and/or to increase the rigidity of the elastic body when it is mounted on the elastic body by means of the cover attachment holes 42.1 to 42.4 (see Figure 7 for example). The particular configuration of the cover 48 shown in Figure 12 is advantageous because such an essentially rectangular cover can act as cast or splint and thereby make the elastic body more rigid and/or stiffer. In typical embodiments, the elastic Body B comprises two covers 48, wherein one cover 48 is attached to the front side of the elastic body B and one cover 48 is attached to the back side of the elastic body B.

Figure 13 once more visualizes the functioning of the elastic body B (and the functioning of the invention in general) once a force F is applied onto the connection part 32, especially onto its top surface, i.e. onto the surface on which the fixture 43 is arranged. When a force F is applied onto the connection part 32 (and the main body 31 is held fix, for example by means of the base element 45, the connection part 32 carries out a relative movement with respect to the main body 31. This relative movement is aligned in the direction of the deformation axis A because the flexure system 33 blocks movements in all other directions. In other words: the connection part 32 (also referred to as swinging body) is undergoing a displacement D in the direction of the deformation axis A (the length of the arrow symbolizing the displacement D is not true to scale). An effect of this displacement D is that the front side bridges 37.1 and 37.2 undergo a deformation, because they are either under traction or under compression, depending on the direction of the force F. It is important to understand that the front side bridges 37.1, 37.2 and the back side bridges 37.3, 37.4 always undergo an opposed deformation. In other words: the two upper bridges (here the front side bridges 37.1, 37.2) "see" a movement in one direction while the lower bridges (here the back side bridges 37.3, 37.4) "see" this movement in the opposite direction. For example, when the front side bridges 37.1, 37.2 undergo an elongation due to a traction, the back side bridges 37.3, 37.4 undergo a shortening due to a compression. These antagonistic deformations of the bridges 37.1, 37.2 on one hand and the bridges 37.3, 37.4 on the other hand enable a particularly precise determination of the force F by means of strain gauges placed on the bridges 37.1 to 37.4. In particular, this configuration enables a full Wheatstone-bridge configuration and thus a differential measurement.

The invention is not limited to the preferred embodiments described here. The scope of protection is defined by the claims.

It is further to be noted that methods disclosed in the specification or in the claims may be implemented by a device having means for performing each of the respective acts of these methods.

## List of reference **signs**

| | |
|---|---|
| 1 | Main body |
| 2 | Connection part |
| 3 | Flexure blade |
| 4 | Flexure blade |
| 5 | Slit |
| 6 | Bridge |
| 7 | Flat |
| 8 | Flat |
| 9 | Flat |
| 10 | Flat |
| 12 | Strain gauge |
| 13 | Attachment |

| | |
|---|---|
| 14 | Bridge |
| 15 | Bridge |
| 16 | Attachment |
| 21 | Main body |
| 22 | Connection part |
| 23 | Flexure blade |
| 24 | Flexure blade |
| 25 | Flexure blade |
| 26 | Flexure blade |
| 27 | Slit |
| 28 | Bridge |
| 29 | Bridge |
| 31 | Main body |
| 32 | Connection part |
| 33 | Flexure system |
| 34.1... 34.4 | Flexure blades |
| 35.1... 35.6 | Rectangular slit |
| 36.1... 36.2 | Straight slit (short) |
| 37.1... 37.4 | Bridge |
| 38.1... 38.5 | Access hole |
| 39 | Straight slit (long) |
| 40.1... 40.2 | Undercut |
| 41.1... 41.4 | Guiding cut-out |
| 42.1... 42.4 | Cover attachment hole |
| 43 | Fixture |
| 44 | Fixation hole |
| 45 | Base element |
| 46 | Base recess |
| 47 | Base hole |
| 48 | Cover |
| 49.1... 49.4 | Screw holes |
| 50.1... 50.2 | Guiding rail |

| | |
|---|---|
| A | Deformation axis |
| B | Elastic body |
| D | Displacement |
| F | Force |
| Z | Bridge zone |

## Claims

1. Force sensor comprising an elastic body and at least one strain gauge,

   the elastic body is configured to deform essentially exclusively in at least a first specific location,
   wherein the first specific location hosts the strain gauge,
   wherein the first specific location comprises a bridge, wherein the bridge connects a connection part of the elastic body to a main body of the elastic body,
   wherein a sensitive part of the strain gauge covers the bridge,
   wherein said elastic body comprises a multitude of slits and flexure blades arranged such that the elastic body is essentially flexible in one direction parallel to the surface normal of said flexure blades and essentially non-flexible in all other directions, said flexure blades extending perpendicular to said one direction,
   **characterized in that**:
   said bridge is arranged to deform in traction or compression in said one direction, said bridge extending parallel to said one direction.

2. Force sensor according to claim 1, **characterized in that** the elastic body is configured to deform essentially exclusively in a multitude of specific locations, wherein the multitude of specific locations comprises the first specific location.

3. Force sensor according to claim 2, wherein the multitude of specific locations are each configured to host a strain gauge.

4. Force sensor according to claim 3, **characterized in that** a form of each specific location of the multitude of specific locations corresponds essentially exactly to a sensitive region of the corresponding strain gauge.

5. Force sensor according to any of the claims 2 to 4, **characterized in that** the multitude of specific locations comprises an equal number of specific locations, wherein the elastic body is designed such that one half of the specific locations are subject to compression and the other half of the specific locations are subject to traction when the elastic body is deformed, in particular in a typical deformation direction.

6. Force sensor according to any of the claims 2 to 5 **characterized in that** the specific locations are distributed essentially symmetrically around the elastic body.

**7.** Force sensor according to any of the previous claims, **characterized in that** the elastic body is essentially cylindrical or essentially cubical.

**8.** Force sensor according to any of the previous claims, **characterized in that** the elastic body comprises at least four bridges, wherein each bridge connects the connection part to the main body.

**9.** Force sensor according to claim 8, **characterized in that** the bridges comprise at least two upper bridges and at least two lower bridges, each bridge comprises a top connection and a bottom connection, wherein the top connections of the upper bridges are connected to the main body and/or wherein the bottom connections of the upper bridges are connected to the connection part and/or wherein the top connections of the lower bridges are connected to the connection part and/or wherein the bottom connections of the lower bridges are connected to the main body.

**10.** Force sensor according to any of the previous claims, wherein the force sensor comprises a multitude of strain gauges, wherein preferably each strain gauge is placed on a corresponding specific location.

**11.** Force sensor according to claim 10, **characterized in that** the force sensor is configured such that a strain of each specific location is measured by its corresponding strain gauge.

**12.** Method for manufacturing an elastic body of a force sensor according to any of the claims 1 to 11, comprising the steps:

- creating, in particular drilling, a multitude of access holes into a workpiece, wherein the workpiece typically comprises titanium,
- creating at least one undercut in the workpiece, wherein the undercut interacts with at least one of the access holes such as to create at least one bridge,
- using the access holes for inserting a wire for electro-discharge machining into the workpiece,
- cutting a multitude of slits into the workpiece by means of the wire, such as to create the elastic body, wherein flexure blades are formed preferably by the cutting of the slits.

**Patentansprüche**

**1.** Kraftsensor, umfassend einen elastischen Körper und mindestens einen Dehnungsmessstreifen,

wobei der elastische Körper so konfiguriert ist, dass er sich im Wesentlichen ausschließlich an mindestens einer ersten spezifischen Stelle verformt,
wobei die erste spezifische Stelle den Dehnungsmessstreifen aufnimmt,
wobei die erste spezifische Stelle eine Brücke umfasst, wobei die Brücke einen Verbindungsteil des elastischen Körpers mit einem Hauptkörper des elastischen Körpers verbindet,
wobei ein empfindlicher Teil des Dehnungsmessstreifens die Brücke bedeckt,
wobei der elastische Körper eine Vielzahl von Schlitzen und Biegeelementen umfasst, die so angeordnet sind, dass der elastische Körper im Wesentlichen in einer Richtung parallel zur Oberflächennormalen der Biegeelemente flexibel und in allen anderen Richtungen im Wesentlichen nicht flexibel ist, wobei sich die Biegeelemente senkrecht zu der einen Richtung erstrecken,
**dadurch gekennzeichnet, dass**:
die Brücke so angeordnet ist, dass sie sich in Zug- oder Druckrichtung in der einen Richtung verformt, wobei sich die Brücke parallel zu der einen Richtung erstreckt.

**2.** Kraftsensor nach Anspruch 1, **dadurch gekennzeichnet, dass** der elastische Körper so konfiguriert ist, dass er sich im Wesentlichen ausschließlich an einer Vielzahl spezifischer Stellen verformt, wobei die Vielzahl spezifischer Stellen die erste spezifische Stelle umfasst.

**3.** Kraftsensor nach Anspruch 2, wobei die Vielzahl spezifischer Stellen jeweils so konfiguriert sind, dass sie je einen Dehnungsmessstreifen aufnehmen.

**4.** Kraftsensor nach Anspruch 3, **dadurch gekennzeichnet, dass** eine Form jeder spezifischen Stelle der Vielzahl spezifischer Stellen im Wesentlichen genau einem empfindlichen Bereich des entsprechenden Dehnungsmessstreifens entspricht.

**5.** Kraftsensor nach einem der Ansprüche 2 bis 4, **dadurch gekennzeichnet, dass** die Vielzahl spezifischer Stellen eine gleiche Anzahl spezifischer Stellen umfasst, wobei der elastische Körper so ausgelegt ist, dass die Hälfte der spezifischen Stellen einer Kompression und die andere Hälfte der spezifischen Stellen einer Zugkraft ausgesetzt ist, wenn der elastische Körper verformt wird, insbesondere in einer typischen Verformungsrichtung.

**6.** Kraftsensor nach einem der Ansprüche 2 bis 5, **dadurch gekennzeichnet, dass** die spezifischen Stellen im Wesentlichen symmetrisch um den elastischen Körper verteilt sind.

**7.** Kraftsensor nach einem der vorhergehenden Ansprüche, **dadurch gekennzeichnet, dass** der elastische Körper im Wesentlichen zylindrisch oder im Wesentlichen kubisch ist.

8. Kraftsensor nach einem der vorstehenden Ansprüche, **dadurch gekennzeichnet, dass** der elastische Körper mindestens vier Brücken umfasst, wobei jede Brücke das Verbindungsteil mit dem Hauptkörper verbindet.

9. Kraftsensor nach Anspruch 8, **dadurch gekennzeichnet, dass** die Brücken mindestens zwei obere Brücken und mindestens zwei untere Brücken umfassen, wobei jede Brücke eine obere Verbindung und eine untere Verbindung umfasst, wobei die oberen Verbindungen der oberen Brücken mit dem Hauptkörper verbunden sind und/oder wobei die unteren Verbindungen der oberen Brücken mit dem Verbindungsteil verbunden sind und/oder wobei die oberen Verbindungen der unteren Brücken mit dem Verbindungsteil verbunden sind und/oder wobei die unteren Verbindungen der unteren Brücken mit dem Hauptkörper verbunden sind.

10. Kraftsensor nach einem der vorstehenden Ansprüche, wobei der Kraftsensor eine Vielzahl von Dehnungsmessstreifen umfasst, wobei vorzugsweise jeder Dehnungsmessstreifen an einer entsprechenden spezifischen Stelle angeordnet ist.

11. Kraftsensor nach Anspruch 10, **dadurch gekennzeichnet, dass** der Kraftsensor so konfiguriert ist, dass eine Dehnung jeder spezifischen Stelle durch den entsprechenden Dehnungsmessstreifen gemessen wird.

12. Verfahren zur Herstellung eines elastischen Körpers eines Kraftsensors gemäß einem der Ansprüche 1 bis 11, umfassend die folgenden Schritte:

    - Erzeugen, insbesondere Bohren, einer Vielzahl von Zugangsbohrungen in ein Werkstück, wobei das Werkstück typischerweise Titan umfasst,
    - Erzeugen mindestens einer Hinterschneidung in dem Werkstück, wobei die Hinterschneidung mit mindestens einer der Zugangsbohrungen in Zusammenwirkung steht, um mindestens eine Brücke zu erzeugen,
    - Verwenden der Zugangsbohrungen zum Einführen eines Drahtes für die Elektroerosionsbearbeitung in das Werkstück,
    - Schneiden einer Vielzahl von Schlitzen in das Werkstück mittels des Drahtes, um den elastischen Körper zu erzeugen, wobei Biegeelemente vorzugsweise durch das Schneiden der Schlitze gebildet werden.

**Revendications**

1. Capteur de force comprenant un corps élastique et au moins une jauge de contrainte,

    le corps élastique étant configuré pour se déformer essentiellement exclusivement à au moins un premier emplacement spécifique,
    dans lequel le premier emplacement spécifique héberge la jauge de contrainte,
    dans lequel le premier emplacement spécifique comprend un pont, dans lequel le pont relie une partie de connexion du corps élastique à un corps principal du corps élastique,
    dans lequel une partie sensible de la jauge de contrainte recouvre le pont,
    le corps élastique comprenant une multitude de fentes et de lames flexibles disposées de telle sorte que le corps élastique soit essentiellement flexible dans une direction parallèle à la normale à la surface des lames flexibles et essentiellement non flexible dans toutes les autres directions, les lames flexibles s'étendant perpendiculairement à ladite direction, **caractérisé en ce que** :
    le pont est agencé pour se déformer en traction ou en compression dans ladite direction, le pont s'étendant parallèlement à ladite direction.

2. Capteur de force selon la revendication 1, **caractérisé en ce que** le corps élastique est configuré pour se déformer essentiellement exclusivement à une multitude d'emplacements spécifiques, dans lequel la multitude d'emplacements spécifiques comprend le premier emplacement spécifique.

3. Capteur de force selon la revendication 2, dans lequel la multitude d'emplacements spécifiques sont chacun configurés pour héberger une jauge de contrainte.

4. Capteur de force selon la revendication 3, **caractérisé en ce qu'**une forme de chaque emplacement spécifique de la multitude d'emplacements spécifiques correspond essentiellement exactement à une région sensible de la jauge de contrainte correspondante.

5. Capteur de force selon l'une quelconque des revendications 2 à 4, **caractérisé en ce que** la multitude d'emplacements spécifiques comprend un nombre égal d'emplacements spécifiques, dans lequel le corps élastique est conçu de telle sorte que la moitié des emplacements spécifiques sont soumis à une compression et l'autre moitié des emplacements spécifiques sont soumis à une traction lorsque le corps élastique est déformé, en particulier dans une direction de déformation typique.

**6.** Capteur de force selon l'une quelconque des revendications 2 à 5, **caractérisé en ce que** les emplacements spécifiques sont répartis de manière essentiellement symétrique autour du corps élastique.

**7.** Capteur de force selon l'une quelconque des revendications précédentes, **caractérisé en ce que** le corps élastique est essentiellement cylindrique ou essentiellement cubique.

**8.** Capteur de force selon l'une quelconque des revendications précédentes, **caractérisé en ce que** le corps élastique comprend au moins quatre ponts, chaque pont reliant la partie de connexion au corps principal.

**9.** Capteur de force selon la revendication 8, **caractérisé en ce que** les ponts comprennent au moins deux ponts supérieurs et au moins deux ponts inférieurs, chaque pont comprenant une connexion supérieure et une connexion inférieure, dans lequel les connexions supérieures des ponts supérieurs sont connectées au corps principal et/ou dans lequel les connexions inférieures des ponts supérieurs sont connectées à la partie de connexion et/ou dans lequel les connexions supérieures des ponts inférieurs sont connectées à la partie de connexion et/ou dans lequel les connexions inférieures des ponts inférieurs sont connectées au corps principal.

**10.** Capteur de force selon l'une quelconque des revendications précédentes, dans lequel le capteur de force comprend une multitude de jauges de contrainte, dans lequel, de préférence, chaque jauge de contrainte est placée sur un emplacement spécifique correspondant.

**11.** Capteur de force selon la revendication 10, **caractérisé en ce que** le capteur de force est configuré de telle sorte qu'une contrainte de chaque emplacement spécifique est mesurée par sa jauge de contrainte correspondante.

**12.** Procédé de fabrication d'un corps élastique d'un capteur de force selon l'une quelconque des revendications 1 à 11, comprenant les étapes suivantes :

- créer, en particulier percer, une multitude de trous d'accès dans une pièce à usiner, dans lequel la pièce à usiner comprend typiquement du titane,
- créer au moins une contre-dépouille dans la pièce à usiner, dans lequel la contre-dépouille interagit avec au moins l'un des trous d'accès de manière à créer au moins un pont,
- utiliser les trous d'accès pour insérer un fil pour l'usinage par électroérosion dans la pièce à usiner,

- découper une multitude de fentes dans la pièce à usiner à l'aide du fil, de manière à créer le corps élastique, dans lequel des lames flexibles sont formées de préférence par la découpe des fentes.

Fig. 1

Fig. 2

Fig. 3

Fig. 3a

Fig. 4

EP 3 679 338 B1

Fig. 5

Fig. 6

Fig. 7

Fig. 8

Fig. 9

Fig. 10

Fig. 11

Fig. 12

Fig. 13

# EP 3 679 338 B1

**Patent documents cited in the description**

- US 2011162465 A